# EUROPÄISCHE PATENTANMELDUNG

(11) **EP 0 882 646 A1**
(43) Veröffentlichungstag der Anmeldung: **09.12.1998**
(21) Anmeldenummer: 97117446.1
(22) Anmeldetag: 09.10.1997
(51) Int. Cl.: B62L 3/02, B60T 7/10

(54) **Handbremshebel mit Feststelleinrichtung**

(30) Priorität: 03.06.1997 DE 19723151
(71) Anmelder: Casagarden GmbH & Co. KG., Reha-Produkte für die Pflege, 32584 Löhne (DE)
(72) Erfinder: Frankowski, Günter, 32584 Löhne (DE)

(57) **Zusammenfassung**

Die Erfindung betrifft einen Hebel mit einer Feststellvorrichtung, insbesondere einen Handbremshebel einer Gehhilfe, der ergonomisch, leicht und einfach zu bedienen und robust ausgebildet ist, was dadurch erzielt wird, daß der Betätigungshebel (1) aus einer ersten Normalstellung im Gehäuse (2) in einer, zur Griffstange (3) in einer etwa senkrechten Richtung verlaufenden Führung (4), in eine zweite Bremsstellung verschwenkbar ist, der aus der zweiten Bremsstellung in der Führung (4) etwa parallel zur Griffstange (3) in deren Richtung bis in eine dritte Feststellposition beweglich geführt ist, der Betätigungshebel (1) von einem elastischen Federelement in Richtung der Normalstellung vorgespannt ist und daß der Betätigungshebel (1) und das Gehäuse (2) miteinander korrespondierende lösbare Rastmittel aufweisen, mit denen der Betätigungshebel (1) in der angezogenen dritten Feststellposition festgestellt ist.

## Beschreibung

Die Erfindung betrifft einen Hebel mit einer Feststellvorrichtung, insbesondere einen Handbremshebel einer Gehhilfe, mit einem Gehäuse mit einer Befestigungsvorrichtung zur Befestigung an einer Griffstange und einer Aufnahme für einen Bowdenzugmantel und mit einem Betätigungshebel mit einer Aufnahme für den Innenzug eines Bowdenzuges und mit einer Drehachse, um die der Betätigungshebel gegen eine Rückstellkraft in Richtung auf die Griffstange angezogen und der in eine Feststellposition gebracht werden kann.

Es ist ein Handbremshebel einer Gehhilfe bekannt, WO 93/18946, bei dem ein Bremshebel zum Bremsen an den Griff angezogen werden kann und der zum Einlegen der Feststellposition entgegen seiner Normalstellung vom Handgriff der Gehhilfe weg in die entgegengesetzte Richtung gedrückt werden muß.

Nachteilig an diesem vorbekannten Stand der Technik ist zum einen, daß der Handbremshebel nicht unmittelbar im Gehäuse der Handbremse angelenkt ist, sondern an einem zwischengeschalteten dritten Bauteil, welches zur Verwirklichung der Feststellfunktion unbedingt erforderlich ist und zu einer aufwendigen Konstruktion und Fertigung führt. Weiterhin ist von Nachteil, daß die zum Einlegen der Feststellbremse vorgesehene Bewegung wenig ergonomisch ist und die auch nicht dem üblichen Verständnis der über Jahrzehnte angelernten Gewohnheit entspricht, einen Bremshebel zur Betätigung anzuziehen und nicht entgegen seiner normalen Betätigungsrichtung bewegen zu müssen.

Aufgabe der Erfindung ist es, einen Hebel mit einer Feststellvorrichtung zur Verfügung zu stellen, der ergonomisch, mechanisch leicht und einfach zu bedienen und robust ausgebildet ist.

Die Lösung dieser Aufgabe wird in Verbindung mit den Oberbegriffsmerkmalen erfindungsgemäß durch die im kennzeichnenden Teil des Hauptanspruches angegebene technische Lehre vermittelt. Der besondere Vorteil des Gegenstandes der Erfindung ist zum einen, daß das Einlegen der Feststellung im wesentlichen eine Fortsetzung des bekannten Bremsvorganges darstellt, daß also von alten Menschen jahrzehntelang erlernte Bewegungsabläufe beibehalten werden können und zum anderen, daß sich der Hebel aus nur zwei Hauptbauteilen zusammensetzt, nämlich aus dem Betätigungshebel und dem Gehäuse. Des weiteren kann eine Person zur Betätigung und auch zum Lösen der Bremse ihre Hände an den Griffen der Gehhilfe behalten und muß diese nicht loslassen, was objektiv und für einen gebrechlichen Menschen vor allen Dingen subjektiv einen Sicherheitsgewinn bedeutet, da die Möglichkeit zum Abstützen an der Gehhilfe in jedem Moment erhalten bleibt.

Der stark vereinfachte Aufbau des Hebels erlaubt eine sehr wirtschaftliche Herstellung und ist zudem absolut wartungsfrei. Weiterhin sind die benötigten Handkräfte minimal und auf ältere gebrechliche Personen abgestimmt.

Der Hebel befindet sich im Ruhezustand in einer Normalstellung, aus der der Betätigungshebel durch übliches Anziehen per Hand an den Griff in eine Bremsstellung gezogen und durch einfaches Loslassen wieder gelöst werden kann. Aus der Bremsstellung heraus kann der Betätigungshebel jedoch über eine geringe zusätzliche Krafteinwirkung im Bereich des vorderen Hebelabschnittes des Betätigungshebels weiter an die Griffstange herangezogen und in dieser Position verriegelt werden. Zum Lösen der Bremse ist nur eine sehr geringe Krafteinwirkung, bevorzugt am hinteren Hebelabschnitt, in Richtung auf die Griffstange erforderlich, wodurch die Verrastung der Rastmittel aufgehoben wird und der Betätigungshebel von der über den Bowdenzug wirkenden Federkraft der Bremse in die Normalstellung zurückgeführt wird.

Zur Verwirklichung dieses Bewegungsablaufes ist der Betätigungshebel im Gehäuse in einer zur Griffstange in einer etwa senkrechten Richtung verlaufenden Führung etwa parallel zur Griffstange und in deren Richtung beweglich geführt, wobei der Betätigungshebel von einem elastischen Federelement in Richtung der Normalstellung vorgespannt bleibt und Betätigungshebel und Gehäuse lösbare Rastmittel aufweisen, mit denen der Betätigungshebel in der angezogenen Feststellposition arretiert werden kann.

Das Lösen der Bremse kann auch über eine geringe Kraft in entgegengesetzter Richtung zur Griffstange, in der bevorzugten Einbaulage eines Handbremshebels einer Gehhilfe also etwa senkrecht nach unten, erfolgen. Als einzusetzende Kraft kann hierbei bereits die anteilige Gewichtskraft von Hand und Unterarm einer die Gehhilfe benötigenden Person ausreichen, die auf die äußere Innenseite des als geschlossener Bügel ausgeführten Betätigungshebels ausgeübt wird.

Weitere vorteilhafte Ausgestaltungen des Gegenstandes der Erfindung ergeben sich aus den Unteransprüchen.

Von besonderem Vorteil ist insbesondere, daß das elastische Federelement einer am Fahrzeug bzw. der Gehhilfe vorhandenen Bremse verwendet werden kann, das über den Bowdenzug auf den Hebel einwirkt, so daß kein zusätzliches Bauteil verwendet werden muß. Der Bowdenzug ist vorteilhafterweise winklig so am Gehäuse angeordnet, daß der Innenzug eine zur Griffstange parallele Kraftkomponente und eine kleine, zur Griffstange senkrechte Kraftkomponente erzeugt, so daß zum Bremsen die üblichen Handkräfte erforderlich sind und zum Feststellen der Bremse nur eine kleine zusätzliche Gegenkraft zur senkrechten Kraftkomponente erzeugt werden muß. Diese von Hand zu erzeugende Gegenkraft kann so klein gehalten werden, daß sie selbst von älteren gebrechlichen Personen noch leicht aufgebracht werden kann.

Die beiden Hauptbestandteile des Hebels, das Gehäuse und der Betätigungshebel bestehen im wesentlichen aus Kunststofformteilen, die sich sehr wirtschaftlich herstellen lassen. Die Führung und die Rastmittel werden vorteilhafterweise von Durchgangsöffnungen im Betätigungshebel und durch diese Durchgangsöffnungen hindurchgeführte und im Gehäuse gelagerte Achsen erzeugt. Eine Funktionsumkehr durch am Betätigungshebel angeordnete Nocken, die in entsprechenden Führungen und Kulissen im Gehäuse angeordnet sind, sind jedoch alternativ ebenfalls denkbar.

Vorteilhaft ist insbesondere, daß der vordere, als Funktionsfläche ausgebildete Hebelabschnitt nicht nur farblich optisch hervorgehoben ist, um auf seine besondere Funktion hinzuweisen, sondern daß diese Funktionsfläche auch rutschfrei gestaltet ist, insbesondere aus einem weicheren Material mit höherem Reibungsbeiwert besteht oder eine rauhere oder beliebig geriffelte Oberfläche aufweist. Die ordnungsgemäße Bedienbarkeit des erfinderischen Hebels ist damit sicher gewährleistet.

Nachfolgend ist ein Ausführungsbeispiel der Erfindung anhand von Zeichnungen näher beschrieben. Es zeigen:

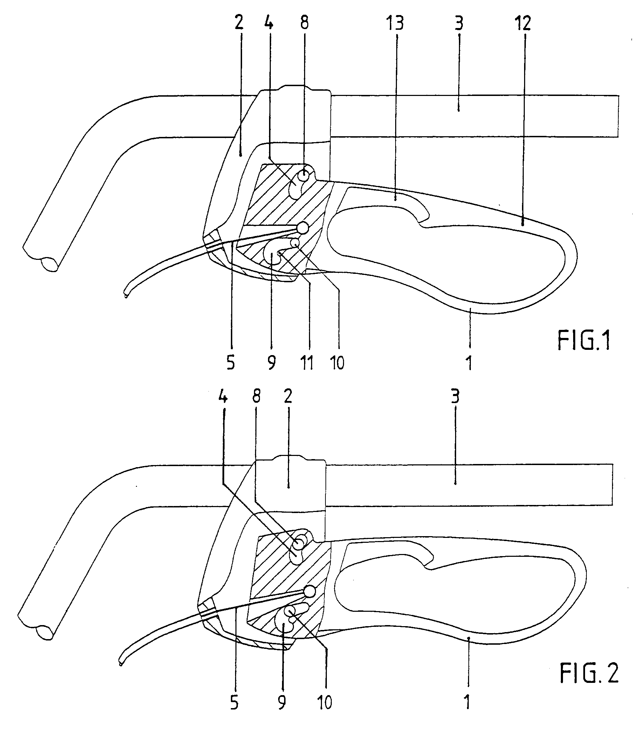

- Fig. 1: einen Handbremshebel in Normalstellung in teilweise geschnittenen Seitenansicht,
- Fig. 2: den Handbremshebel der Figur 1 in einer Bremsstellung,

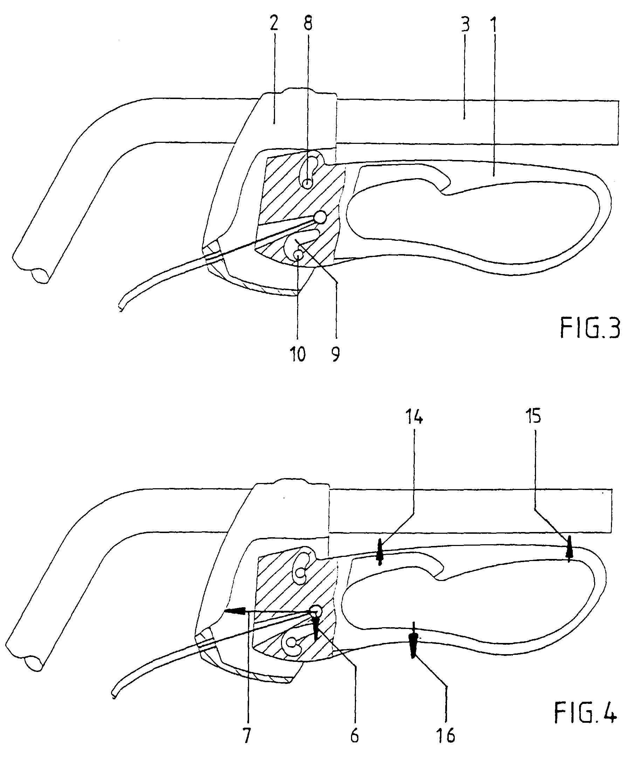

- Fig. 3: den Handbremshebel der Figuren 1 und 2 in einer festgestellten Position und
- Fig.4: den Handbremshebel der Figuren 1 bis 3 in einer instabilen Übergangsstellung.

Der Hebel mit Feststellvorrichtung , der insbesondere als Handbremshebel einer Gehhilfe Verwendung finden kann, besteht im wesentlichen aus einem Gehäuse 2, welches an einer Griffstange 3 festlegbar ist und das eine Aufnahme für den Mantel eines Bowdenzuges 5 aufweist sowie aus einem Betätigungshebel 1, der eine Aufnahme für den Innenzug eines Bowdenzuges 5 aufweist und der im Gehäuse 2 entlang festgelegter Kurvenbahnen in Richtung auf die Griffstange 3 in eine Bremsstellung angezogen und verschwenkt, dort festgelegt und wieder entriegelt werden kann.

Zu diesem Zweck weist der Betätigungshebel 1 im Gehäuse 2 eine zur Griffstange 3 in etwa senkrechter Richtung verlaufende Führung 4 auf, die leicht bogenförmig ausgebildet ist. Weiterhin besitzt der Betätigungshebel 1 eine Kulisse 9, die im wesentlichen hakenförmig ausgebildet ist und die eine Rastnase 11 bildet, hinter der in der festgestellten Position des Betätigungshebels 1 die Achse 10 verriegelt gehalten ist. Die hakenförmige Kulisse 9 besitzt einen in der Normalstellung des Betätigungshebels (1) zur Griffstange (3) in einer parallelen oder leicht zum Griffende hin geneigten längeren Abschnitt und einen in senkrechter Richtung nach außen gerichteten kürzeren Abschnitt, wobei der Innenwinkel zwischen den Abschnitten die Rastnase (11) für die Achse (10) bildet.

Die Achse 10 ist senkrecht durch die Kulisse 9 hindurchgeführt und jeweils seitlich im Gehäuse 2 festgelegt. Eine dazu parallele Achse 8 durchtritt die Führung 4 des Betätigungshebels 1 und ist ebenfalls an beiden Seiten im Gehäuse 2 festgelegt. Zwischen der Führung 4 und der Kulisse 9 ist der Bowdenzug 5 angelenkt, der über die Rückstellkraft der Bremsfeder den Betätigungshebel 1 in der Normalstellung hält, in der er eine maximale Entfernung von der Griffstange 3 besitzt. Der Bowdenzug 5 tritt unter einem spitzen Winkel zur Griffstange 3 so in das Gehäuse 2 ein, daß die Zugkraft der Bremsfeder eine zur Griffstange 3 senkrechte Kraftkomponente 6 und eine dazu parallele Kraftkomponente 7 erzeugt. Die senkrechte Kraftkomponente 6 ist dabei jedoch nur so groß, daß eine entgegengerichtete Feststellkraftkomponente 14, die zur Bewegung des Betätigungshebels 1 aus einer Bremsstellung in eine festgestellte Position aufzubringen ist, nur unwesentlich größer ist, als diese senkrechte Kraftkomponente 6.

In der Normalstellung liegen die Achsen 8, 10 in den der Griffstange 3 zugewandten Endlagen der Durchgangsöffnungen der Führung 4 und der Kulisse 9 an. In einer Bremsstellung ist der Betätigungshebel 1 um die Achse 8 verdreht und durch die Form der Kulisse 10, die in diesem Bereich geradlinig ausgeführt ist, bereits leicht in Richtung des gegenüberliegenden Endes der Führung 4 bzw. parallel zur Griffstange 3 verschoben. Bei einer weiteren Krafteinwirkung, die insbesondere senkrecht zur Griffstange 3 im Bereich des Gehäuses 2 auf den vorderen Hebelabschnitt 13 des Betätigungshebels 1 ausgeübt wird, wandert die Rastnase 11 der Kulisse 9 um die Achse 10 herum und rastet dahinter ein. Die Achse 8 der Führung 4 ist in dieser Stellung in ihrer zweiten Endlage. Die Gehhilfe ist nun gebremst, so daß sich eine die Gehhilfe benötigende Person sicher daran abstützen und ausruhen kann. Soll die Bremse entriegelt werden, ist auf den hinteren Hebelabschnitt 12 eine sehr gering Entriegelungskraft 15 senkrecht zur Griffstange 3 aufzubringen, wobei der Betätigungshebel 1 geringfügig um die Achse 8 verschwenkt und die Rastnase 11 der Kulisse 9 hinter der Achse 10 hervorbewegt wird, so daß die Federkraft des Bowdenzuges 5 den Betätigungshebel 1 ab einer Übergangsstellung in die Normalstellung zurückbewegt und die Gehhilfe wieder frei beweglich ist.

Das Lösen der Bremse kann auch dadurch erfolgen, daß von der die Gehhilfe benötigenden Person eine geringe Druckkraft 16 in eine zur Griffstange 3 entgegengesetzte Richtung nach unten ausgeübt wird, wobei der Betätigungshebel 1 geringfügig um die Achse 10 dreht und die Rastnase 11 der Kulisse 9 so weit zurücktritt, daß der Betätigungshebel 1 durch die Rückstellkraft des Bowdenzuges 5 in die ungebremste Ausgangslage zurückgezogen wird.

## Patentansprüche

1. Hebel mit Feststellvorrichtung, insbesondere Handbremshebel einer Gehhilfe, mit einem Gehäuse mit einer Befestigungsvorrichtung an einer Griffstange und einer Aufnahme für einen Bowdenzugmantel, mit einem Betätigungshebel mit einer Aufnahme für den Bowdenzug, mit einer Drehachse, um die der Betätigungshebel gegen eine Rückstellkraft in Richtung auf die Griffstange angezogen und der in eine Feststellposition bewegt werden kann, **dadurch gekennzeichnet**, daß der Betätigungshebel (1) aus einer ersten Normalstellung im Gehäuse (2) in einer, zur Griffstange (3) in einer etwa senkrechten Richtung verlaufenden Führung (4), in eine zweite Bremsstellung verschwenkbar geführt ist, der aus der zweiten Bremsstellung in der Führung (4) etwa parallel zur Griffstange (3) in deren Richtung bis in eine dritte Feststellposition beweglich geführt ist, der Betätigungshebel (1) von einem elastischen Federelement in Richtung der Normalstellung vorgespannt ist und daß der Betätigungshebel (1) und das Gehäuse (2) miteinander korrespondierende lösbare Rastmittel aufweisen, mit denen der Betätigungshebel (1) in der angezogenen dritten Feststellposition festgestellt ist.

2. Hebel nach Anspruch 1, dadurch gekennzeichnet, daß der Bowdenzug (5) im Betätigungshebel (1) mindestens in der dritten Feststellposition eine Wirkungslinie mit einer Kraftkomponente (6) senkrecht und entgegengesetzt der Richtung zur Griffstange (3) aufweist und daß das elastische Federelement mit der Rückstellfeder der Bremse der Gehhilfe identisch ist.

3. Hebel nach Anspruch 2, dadurch gekennzeichnet, daß die senkrechte Kraftkomponente (6) kleiner ist als eine von einer älteren, gebrechlichen Person aufzubringen Handkraft.

4. Hebel nach einem der vorgenannten Ansprüche, dadurch gekennzeichnet, daß die miteinander korrespondierenden Rastmittel von einer Kulisse (9) im Betätigungshebel (1) und von einer im Gehäuse (2) gelagerten und die Kulisse (9) durchtretenden Achse (10) gebildet werden und daß die Kulisse (9) hakenförmig ausgebildet ist, mit einem in der Normalstellung des Betätigungshebels (1) zur Griffstange (3) in einer parallelen oder leicht zum Griffende geneigten längeren Abschnitt und einem in einer senkrechten Richtung nach außen gerichteten kürzeren Abschnitt, wobei der Innenwinkel zwischen den Abschnitten eine Rastnase (11) für die Achse (10) bildet.

5. Hebel nach einem der vorgenannten Ansprüche, dadurch gekennzeichnet, daß der Betätigungshebel (1) jeweils eine als Durchgangsöffnung ausgebildete Führung (4) und eine Kulisse (9) aufweist, sich durch die Führung (4) eine Achse (8) als Drehachse und durch die Kulisse (9) eine Achse (10) bis ins Gehäuse (2) erstreckt und beide dort gelagert sind, daß in Normalstellung die Achsen (8,10) in den der Griffstange (3) zugewandten Endlagen der Durchgangsöffnungen anliegen, nach einer Drehbewegung des Betätigungshebels (1) um Achse (8) die Achse (10) in der Kulisse (9) verschoben ist, nach einer weiteren Bewegung des Betätigungshebels (1) zur Griffstange (3) die Achsen (8,10) in einer entgegengesetzten Endlage in der Führung (4) und der Kulisse (9) in der Feststellposition des Betätigungshebels (1) anliegen, wobei die Achse (10) hinter eine Rastnase (11) der Kulisse (9) die Rückstellbewegung des Betätigungshebels (1) verriegelt, der von der Rückstellkraft der Bremsfeder hinter der Rastnase (11) gehalten ist und daß nach einer weiteren Drehbewegung des Betätigungshebels (1) um die Achse (8) in ihrer entgegengesetzten Endlage die Rastnase (11) hinter der Kontur der Achse (10) hervorgetreten und entriegelt ist und der Betätigungshebel (1) von der zur Griffstange (3) senkrechten Kraftkomponente (6) nach außen und die Achse (8) in die Endlage der Führung (4) zurückgeführt ist.

6. Hebel nach einem der vorgenannten Ansprüche 1 bis 4, dadurch gekennzeichnet, daß der Betätigungshebel (1) jeweils eine als Durchgangsöffnung ausgebildete Führung (4) und eine Kulisse (9) aufweist, sich durch die Führung (4) eine Achse (8) als Drehachse und durch die Kulisse (9) eine Achse (10) bis ins Gehäuse (2) erstreckt und dort gelagert sind, daß in Normalstellung die Achsen (8,10) in den der Griffstange (3) zugewandten Endlagen der Durchgangsöffnungen anliegen, nach einer Drehbewegung des Betätigungshebels (1) um Achse (8) die Achse (10) in der Kulisse (9) verschoben ist, nach einer weiteren Bewegung des Betätigungshebels (1) zur Griffstange (3) die Achsen (8,10) in einer entgegengesetzten Endlage in der Führung (4) und der Kulisse (9) in der Feststellposition des Betatigungshebels (1) anliegen, wobei die Achse (10) hinter einer Rastnase (11) der Kulisse (9) die Rückstellbewegung des Betätigungshebels (1) verriegelt, der von der Rückstellkraft der Bremsfeder hinter der Rastnase (11) gehalten ist und daß nach einer Drehbewegung des Betätigungshebels (1) entgegengesetzt zur Griffstange (3) um die Achse (10) die Rastnase (11) hinter der Kontur der Achse (10) hervorgetreten und entriegelt ist und der Betätigungshebel (1) von der zur Griffstange (3) senkrechten Kraftkomponente (6) nach außen zurückgeführt und die Achsen (8,10) in die Endlagen der Führung (4) und der Kulisse (9) zurückgeführt sind.

7. Hebel nach einem der vorgenannten Ansprüche, dadurch gekennzeichnet, daß die Führung (4) statt im Betätigungshebel (1) im Gehäuse angeordnet und die Achse (8) als Führungsnocken am Betätigungshebel angeordnet sind.

8. Hebel nach einem der vorgenannten Ansprüche, dadurch gekennzeichnet, daß statt der Achse (10) ein Anschlagnocken am Betätigungshebel angeordnet ist und die Kulisse (9) als Ausnehmung im Gehäuse oder als Rastnase an den seitlichen Stirnseiten des Gehäuses ausgebildet ist.

9. Hebel nach einem der vorgenannten Ansprüche, dadurch gekennzeichnet, daß der Anlenkpunkt des Bowdenzuges (5) zwischen der Führung (4) und der Kulisse (9) und den beiden Achsen (8,10) angeordnet ist.

10. Hebel nach einem der vorgenannten Ansprüche, dadurch gekennzeichnet, daß der vordere Hebelabschnitt (13) des Betätigungshebels (1) als Funktionsfläche rutschfrei, insbesondere weicher und/oder rauher ausgeführt und optisch hervorgehoben ist.
